(19) Europäisches Patentamt
European Patent Office
Office européen des brevets

(11) **EP 4 712 425 A1**

(12) **EUROPEAN PATENT APPLICATION**
published in accordance with Art. 153(4) EPC

(43) Date of publication:
**18.03.2026 Bulletin 2026/12**

(21) Application number: **24830780.3**

(22) Date of filing: **25.06.2024**

(51) International Patent Classification (IPC):
***H04L 41/0631*** *(2022.01)*

(52) Cooperative Patent Classification (CPC):
**H04L 41/0631; H04L 41/16**

(86) International application number:
**PCT/CN2024/101444**

(87) International publication number:
**WO 2025/002140 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023 CN 202310782549**

(71) Applicant: **Huawei Technologies Co., Ltd.
Shenzhen, Guangdong 518129 (CN)**

(72) Inventors:
• **YU, Enyu**
  **Shenzhen, Guangdong 518129 (CN)**
• **DONG, Hui**
  **Shenzhen, Guangdong 518129 (CN)**
• **YAN, Minzhi**
  **Shenzhen, Guangdong 518129 (CN)**

(74) Representative: **Isarpatent
Patent- und Rechtsanwälte Partg mbB
Friedrichstraße 31
80801 München (DE)**

(54) **ROOT CAUSE LOCALIZATION METHOD AND APPARATUS, DEVICE AND STORAGE MEDIUM**

(57) This application provides a root cause locating method and apparatus, a device, and a storage medium, and pertains to the field of Internet technologies. The method includes: during root cause locating, obtaining a temporal heterogeneous graph; deleting, based on an attribute of a node in the temporal heterogeneous graph, a normal node and an edge connected to the normal node that are in the temporal heterogeneous graph, and reconstructing a temporal heterogeneous graph obtained through the deletion, to obtain an anomaly subgraph, where a reachable edge exists between a faulty node and another node in the anomaly subgraph; and determining a root cause of the faulty node in the anomaly subgraph. According to the solutions of this application, in the anomaly subgraph obtained through the reconstruction, reachability between the faulty node and another node is retained, and a scale of an original node and noise caused by the normal node are reduced. Therefore, efficiency and accuracy of root cause locating can be improved.

Obtain a temporal heterogeneous graph, where the temporal heterogeneous graph includes a node, an edge, and an attribute of the node — 601

(Optional)
Obtain, in the temporal heterogeneous graph through breadth-first search traversal, a node and an edge on which a faulty node depends within a fault time window, and update the temporal heterogeneous graph based on the obtained node and edge — 602

Select a new faulty node from a neighboring node of an initial faulty node, obtain, in the temporal heterogeneous graph through breadth-first search traversal, a node and an edge on which the new faulty node depends, and update the temporal heterogeneous graph based on the obtained node and edge — 603

Delete, based on the attribute of the node, a normal node and an edge connected to the normal node that are in the temporal heterogeneous graph, and reconstruct a temporal heterogeneous graph obtained through the deletion, to obtain an anomaly subgraph, where a reachable edge exists between a current faulty node and another node in the anomaly subgraph — 604

Determine a root cause of the initial faulty node in the anomaly subgraph — 605

FIG. 6

EP 4 712 425 A1

**Description**

This application claims priority to Chinese Patent Application No. 202310782549.X, filed on June 28, 2023 and entitled "ROOT CAUSE LOCATING METHOD AND APPARATUS, DEVICE, AND STORAGE MEDIUM", which is incorporated herein by reference in its entirety.

**TECHNICAL FIELD**

This application relates to the field of Internet technologies, and in particular, to a root cause locating method and apparatus, a device, and a storage medium.

**BACKGROUND**

With development of computer technologies and network technologies, in many scenarios, a dependency relationship exists between nodes. If a node is faulty, an entire service may be interrupted. For example, an Internet application is split into a plurality of microservices, and there is a calling relationship between the microservices. If a microservice is faulty, the entire Internet application may be unavailable. After a node is faulty, how to efficiently locate a root cause of the fault is critical to quickly recover services.

In a related technology, for determining a root cause, a causal chain of a fault is constructed through manual annotation and manual update, and then the root cause is determined based on the causal chain and a customized algorithm. Because the causal chain is manually annotated and manually updated, efficiency of determining the root cause is low.

**SUMMARY**

This application provides a root cause locating method and apparatus, a device, and a storage medium, to improve efficiency of determining a root cause.

According to a first aspect, this application provides a root cause locating method. The method includes: obtaining a temporal heterogeneous graph, where the temporal heterogeneous graph includes a node, an edge, and an attribute of the node, the node includes an initial faulty node; deleting, based on the attribute of the node, a normal node and an edge connected to the normal node that are in the temporal heterogeneous graph, and reconstructing a temporal heterogeneous graph obtained through the deletion, to obtain an anomaly subgraph, where a reachable edge exists between a current faulty node and another node in the anomaly subgraph, and the current faulty node is obtained based on the initial faulty node; determining a root cause of the initial faulty node in the anomaly subgraph.

In the solution shown in this application, after the temporal heterogeneous graph is obtained, the normal node and the edge connected to the normal node that are in the temporal heterogeneous graph are deleted, and the temporal heterogeneous graph is reconstructed, where the reachable edge exists between the current faulty node and another node in the obtained anomaly subgraph. Then, the root cause of the initial faulty node is determined based on the anomaly subgraph. In the anomaly subgraph obtained through the reconstruction, reachability between the faulty node and another node is retained, and a scale of an original node and noise caused by the normal node are reduced. Therefore, efficiency and accuracy of root cause locating can be improved.

In an example, before the normal node is deleted, a new faulty node is selected from a neighboring node of the initial faulty node, the new faulty node is used for traversal to obtain a node and an edge on which the new faulty node depends, and the temporal heterogeneous graph is updated based on the obtained node and edge, so that a scale of an updated temporal heterogeneous graph is small, to reduce search space of the root cause.

In an example, before the new faulty node is selected from the neighboring node of the initial faulty node, if it is determined that the initial faulty node is not an abnormal node, the new faulty node is determined as a current faulty node. Subsequently, the current faulty node is used to determine a root cause of the current faulty node in the anomaly subgraph, and the root cause of the current faulty node is determined as the root cause of the initial faulty node. In this way, when the initial faulty node is not an abnormal node, no alarm information exists for the initial faulty node, leading to inaccuracy in the determined root cause, and a faulty node is re-determined to improve accuracy of the root cause.

In an example, after the anomaly subgraph is determined, a probability transfer matrix of a node fault in the anomaly subgraph is determined based on a topology structure of the anomaly subgraph and an attribute of a node in the anomaly subgraph, a random walk probability from the current faulty node to another node in the anomaly subgraph is determined based on the probability transfer matrix, and top X nodes in the anomaly subgraph that are sorted in descending order of random walk probabilities are determined as the root cause of the current faulty node, where X is a positive integer. In this way, a probability of anomaly propagation between nodes is determined based on the probability transfer matrix, and a probability of a node being a root cause is reflected based on the random walk probability.

In an example, during determining of the probability transfer matrix, an adjacent matrix of the anomaly subgraph is constructed based on the topology structure of the anomaly subgraph, a feature of an edge in the anomaly subgraph is determined based on the attribute of the node in the anomaly subgraph, and the feature is learned based on the adjacent matrix by using a deep neural network algorithm, to obtain the probability transfer matrix of the node fault in the anomaly subgraph. In this way, the probability of anomaly propagation between nodes is learned by using the deep neural network algorithm.

In an example, because a root cause of a node may be the node, before the probability transfer matrix of the node fault is determined, a self-loop edge is added for each node in the anomaly subgraph, so that the node returns to the node itself from the node. In addition, to allow energy to flow back during a random walk, a reverse edge between nodes is added between the nodes, so that energy between the nodes can flow back.

In an example, when the temporal heterogeneous graph obtained through the deletion is reconstructed, a shortest path between nodes in the temporal heterogeneous graph obtained through the deletion is determined, and an edge is added, based on the shortest path, for an unconnected node in the temporal heterogeneous graph obtained through the deletion, to obtain the anomaly subgraph. Because the shortest path makes the nodes more compact, an amount of computation is relatively small in subsequent root cause determining.

In an example, the temporal heterogeneous graph further includes an attribute of the edge. Considering that a node has a time attribute, and generally there is no root cause within a non-fault time window, the temporal heterogeneous graph is filtered based on a fault time window. In addition, considering that only a node and an edge on which the initial faulty node depends cause a faulty node fault, the temporal heterogeneous graph may further include only a node and an edge on which the faulty node depends, to further filter the temporal heterogeneous graph, so that a scale of the temporal heterogeneous graph is small, and an amount of computation is reduced, to improve efficiency of root cause locating.

In an example, the node and the edge in the temporal heterogeneous graph are generated based on a topology structure and a call chain between nodes, and the attribute of the node is generated based on a monitoring indicator, where the monitoring indicator includes one or more of an alarm, a performance indicator, or a log. In this way, the temporal heterogeneous graph can be obtained through automatic modeling.

According to a second aspect, this application provides a root cause locating apparatus. The apparatus includes at least one module, and the at least one module is configured to implement the root cause locating method according to any one of the first aspect or the examples of the first aspect.

In some embodiments, the module in the root cause locating apparatus is implemented by using software, and the module in the root cause locating apparatus is a program module. In some other embodiments, the module in the root cause locating apparatus is implemented by using hardware or firmware.

According to a third aspect, this application provides a computing device. The computing device includes a processor and a memory, and the processor is configured to execute instructions stored in the memory, to enable the computing device to perform the root cause locating method according to any one of the first aspect or the examples of the first aspect.

According to a fourth aspect, this application provides a computer-readable storage medium. The computer-readable storage medium includes computer program instructions, and when the computer program instructions are executed by a computing device, the computing device performs the root cause locating method according to any one of the first aspect or the examples of the first aspect.

According to a fifth aspect, this application provides a computer program product including instructions. When the instructions are run by a computing device, the computing device is enabled to perform the root cause locating method according to any one of the first aspect or the examples of the first aspect.

**BRIEF DESCRIPTION OF DRAWINGS**

FIG. 1 is a diagram of a temporal heterogeneous graph according to an example embodiment of this application;
FIG. 2 is a diagram of a subgraph of a temporal heterogeneous graph according to an example embodiment of this application;
FIG. 3 is a diagram of a system architecture according to an example embodiment of this application;
FIG. 4 is a diagram of a structure of a computing device according to an example embodiment of this application;
FIG. 5 is a block flowchart of root cause locating according to an example embodiment of this application;
FIG. 6 is a schematic flowchart of a root cause locating method according to an example embodiment of this application;
FIG. 7 is a diagram of subgraph reconstruction according to an example embodiment of this application; and
FIG. 8 is a diagram of a structure of a root cause locating apparatus according to an example embodiment of this application.

## DESCRIPTION OF EMBODIMENTS

To make the objectives, technical solutions, and advantages of this application clearer, the following further describes implementations of this application in detail with reference to the accompanying drawings.

The following explains and describes some terms and concepts in embodiments of this application.

1. Temporal heterogeneous graph (heterogeneous graph)

The temporal heterogeneous graph is defined as $G=(v,\varepsilon,X,Y)$. $v$ represents a node set including nodes included in the temporal heterogeneous graph, $\varepsilon$ represents an edge set including edges between nodes, X represents an attribute matrix of a node including a time attribute, and Y represents an attribute matrix of an edge.

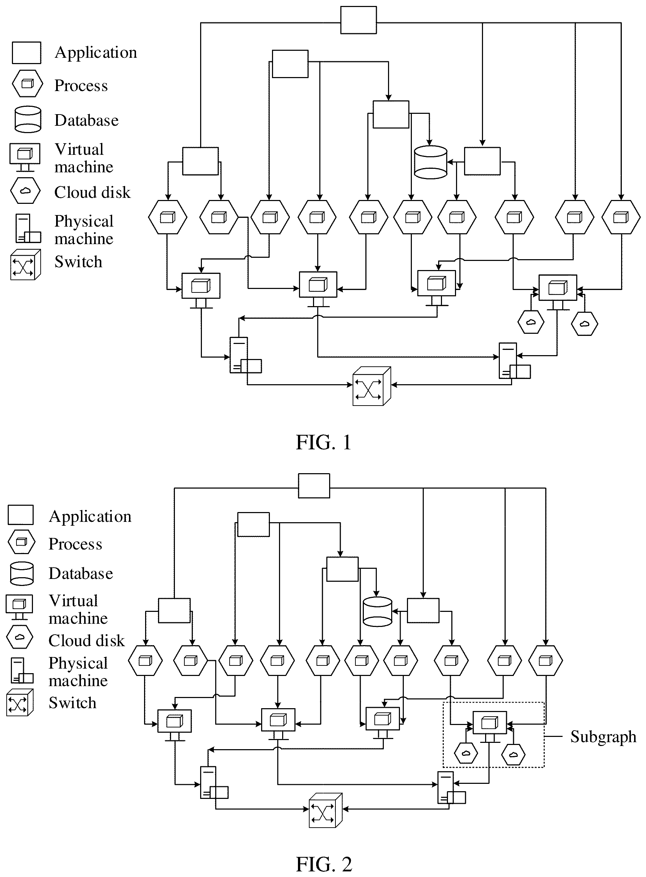

A temporal heterogeneous graph is also associated with a node type mapping function $\phi$ and an edge type mapping function $\varphi$. $\phi$ is represented as $v \to \tau$, $\varphi$ is represented as $\varepsilon \to \rho$, $\tau$ and $\rho$ respectively represent predefined type sets of nodes and edges, and a sum of numbers of elements in the two sets is greater than 2. For example, refer to FIG. 1. A temporal heterogeneous graph of a cloud platform includes seven types of nodes: application, process, database, virtual machine, cloud disk, physical machine, and switch. The temporal heterogeneous graph further includes rich interaction between nodes, for example, a virtual machine is deployed on a physical machine.

2. Subgraph extraction of a temporal heterogeneous graph

A temporal heterogeneous graph $G=(v,\varepsilon,X,Y)$ is given. A subgraph extracted from the temporal heterogeneous graph is also a temporal heterogeneous graph. For example, refer to FIG. 2. In the temporal heterogeneous graph shown in FIG. 1, a part marked in a dashed box may be considered as a subgraph of the temporal heterogeneous graph. In FIG. 2, an extracted subgraph includes only one virtual machine and two cloud disks.

3. Root cause locating in a temporal heterogeneous graph

A temporal heterogeneous graph $G=(v,\varepsilon,X,Y)$ and a faulty node u are given. An objective is to learn a root cause score function $f(\Box)$, so that for any node A that belongs to $v$, $S_A = f(A)$ can be obtained, and $S_A$ can reflect a probability of the node A being a root cause of the faulty node. Probabilities corresponding to all nodes are sorted, and at least one node sorted top is considered as a root cause of the faulty node.

4. Random walk (random walk): for representing an irregular change form, and a series of random trajectories are generated after a random walk.

The following describes the background of this application.

Currently, root cause locating of faults in a cloud platform has attracted wide attention. For different operation and maintenance scenarios, such as storage, cloud, and wireless network, required service domain knowledge often varies, available operation and maintenance data is inconsistent, and usable data is often incomplete. Consequently, a current root cause locating method needs to be closely related to services and cannot be migrated to another scenario. Therefore, a general-purpose root cause locating framework needs to be provided for modeling and handling root cause locating issues in different scenarios.

In addition, use of a microservice architecture is increasingly widespread, and a scale of the cloud platform grows rapidly. This growth includes not only a number of microservices, but also expansion of infrastructure components, such as virtual machines, physical machines (for example, servers), switches, and cloud disks. An existing operation and maintenance scenario may be abstracted as a large-scale temporal heterogeneous graph that includes a plurality of types of nodes and relationships, and objects at different levels change at different frequency. However, an existing computing framework usually takes a long time to process large-scale graph data. For users and operation and maintenance personnel, timeliness of root cause locating is very important. Therefore, both time consumption and accuracy need to be considered for the root cause locating method.

In view of this, this application provides a root cause locating method. The method can be abstracted as root cause locating in an actual operation and maintenance scenario of a temporal heterogeneous graph, for example, a cloud platform scenario. The method may be performed by a root cause locating apparatus. The apparatus may be a hardware apparatus, for example, a computing device such as a server or a terminal. The server may be a cloud server, or may be a local server. The apparatus may alternatively be a software apparatus, for example, a set of software programs running on a hardware apparatus.

The following describes a system architecture provided in an embodiment of this application.

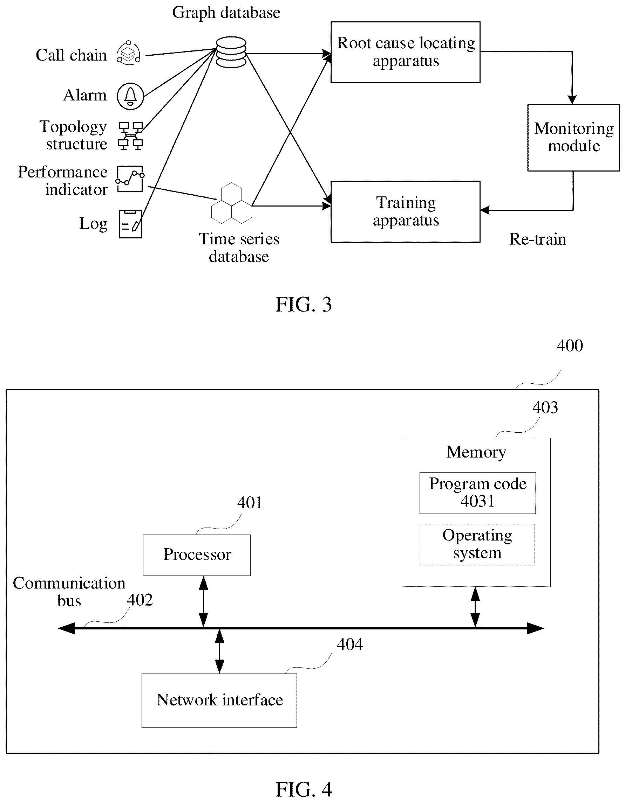

FIG. 3 is a diagram of a system architecture. The system architecture includes a database and a root cause locating apparatus. In a cloud platform scenario, a database may include a graph database and a time series database. An alarm, a call chain, a topology structure, a log, and the like may be stored in the graph database. A performance indicator and the like may be stored in the time series database. For example, the data may be stored in the database in a form of a data queue. The root cause locating apparatus obtains, from the database, data for constructing a temporal heterogeneous graph, to construct the temporal heterogeneous graph. Then, the root cause locating apparatus performs root cause locating. In another example of the cloud platform scenario, the database stores a temporal heterogeneous graph, and the root cause locating apparatus obtains the temporal heterogeneous graph from the database, to perform root cause locating.

In an example, refer to FIG. 3. The system architecture further includes a training apparatus. The training apparatus is configured to train and update a model, and the model is a root cause prediction model for root cause locating in root cause locating. In addition, the training apparatus further provides a query interface and a user feedback interface. The query interface is used by a user to query model training progress and the like, and the user feedback interface is used by the user to determine whether training is completed and the like.

In an example, refer to FIG. 3. The system architecture further includes a monitoring module. The monitoring module determines, based on a locating result of the root cause locating apparatus, whether performance of a model for root cause locating meets a requirement, and instructs the training apparatus to retrain the model when the performance does not meet the requirement.

The following describes a hardware structure of the foregoing computing device.

As shown in FIG. 4, a computing device 400 is optionally implemented by using a general bus architecture. The computing device 400 includes at least one processor 401, a communication bus 402, a memory 403, and at least one network interface 404. The computing device with a structure shown in FIG. 4 is the root cause locating apparatus in FIG. 3.

The processor 401 is, for example, a central processing unit (central processing unit, CPU), a network processor (network processor, NP), a graphics processing unit (graphics processing unit, GPU), a neural-network processing unit (neural-network processing unit, NPU), a data processing unit (Data Processing Unit, DPU), a microprocessor, or one or more integrated circuits configured to implement the solutions of this application. For example, the processor 401 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 402 is configured to transfer information between the foregoing components. The communication bus 402 may be classified into an address bus, a data bus, a control bus, and the like. For ease of representation, only one thick line is used to represent the bus in FIG. 4, but this does not mean that there is only one bus or only one type of bus.

The memory 403 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. For example, the memory 403 exists independently and is connected to the processor 401 through the communication bus 402. Alternatively, the memory 403 may be integrated with the processor 401.

Optionally, the memory 403 is configured to store a topology structure, a call chain, and the like mentioned below. When the computing device 400 needs to use the topology structure and the call chain, the processor 401 accesses the memory 403, to obtain the topology structure and the call chain that are stored in the memory 403.

The network interface 404 uses any apparatus of a transceiver type to communicate with another device or a communication network. The network interface 404 includes a wired network interface, and may further include a wireless network interface. The wired network interface may be, for example, an Ethernet interface. The Ethernet interface may be an optical interface, an electrical interface, or a combination thereof. The wireless network interface may be a wireless local area network (wireless local area networks, WLAN) interface, a network interface of a cellular network, a combination thereof, or the like.

During specific implementation, in an example, the processor 401 may include one or more CPUs.

During specific implementation, in an example, the computing device 400 may include a plurality of processors. Each of the processors may be a single-core processor (single-CPU), or may be a multi-core processor (multi-CPU). The processor herein may be one or more devices, circuits, and/or processing cores for processing data (for example, computer program instructions).

In some embodiments, the memory 403 is configured to store program code 4031 for performing root cause locating in this application, and the processor 401 executes the program code 4031 stored in the memory 403. In other words, the computing device 400 may implement, by using the processor 401 and the program code 4031 in the memory 403, the root cause locating method provided in a method embodiment.

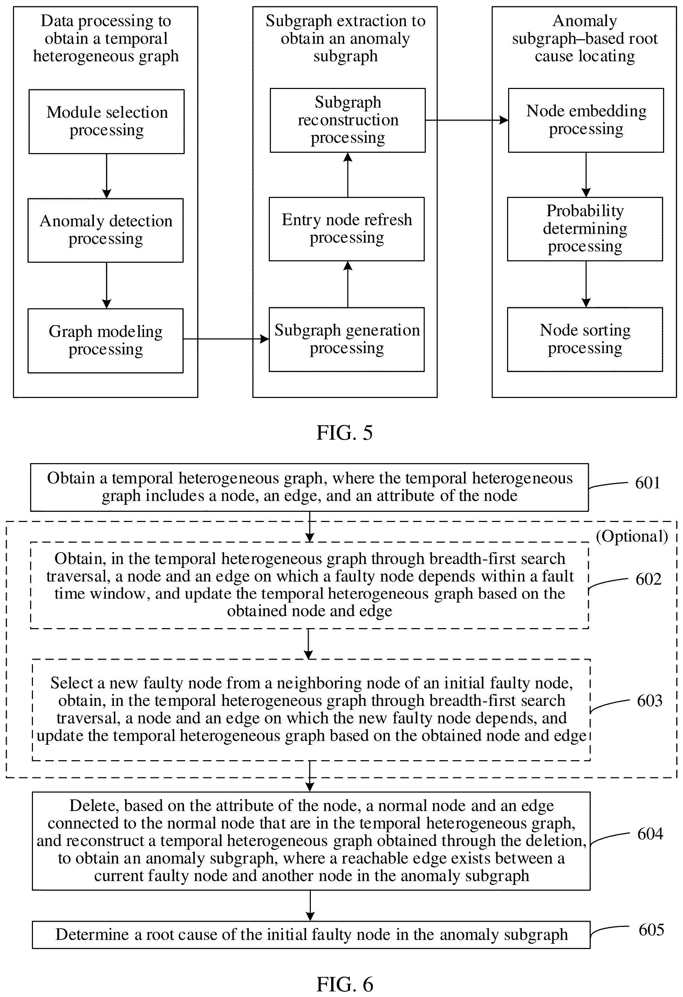

In embodiments of this application, before a procedure of the root cause locating method is described, a block flowchart of this application is briefly described. Refer to FIG. 5. In this application, an input is a temporal heterogeneous graph and an initial faulty node, or data and an initial faulty node that are used for generating the temporal heterogeneous graph, and an output is a root cause of the initial faulty node. There are mainly three phases, which are data processing to obtain the temporal heterogeneous graph, subgraph extraction to obtain an anomaly subgraph, and anomaly subgraph-based root cause locating. The three phases correspond to step 601 to step 605 below.

The phase of data processing to obtain the temporal heterogeneous graph includes module selection processing, anomaly detection processing, and graph modeling processing. The module selection processing is selecting different modules based on different input data. The module selection processing is optional. The module selection processing is selecting different modules based on different scenarios and input data. For example, when the input data includes only a topology structure, an alarm, and a call chain, an execution module does not include an anomaly detection module, a monitoring and prediction module, and the like. When the temporal heterogeneous graph can be obtained directly, the anomaly detection processing and the graph modeling processing are also optional.

The phase of subgraph extraction to obtain the anomaly subgraph includes subgraph generation processing, entry node refresh processing, and subgraph reconstruction processing. The subgraph generation processing is used for performing filtering on the temporal heterogeneous graph, and is optional. The entry node refresh processing is used for re-determining a new faulty node for the temporal heterogeneous graph, and performing breadth-first search based on the new faulty node, and is also optional. The subgraph reconstruction is used for obtaining the anomaly subgraph.

The phase of anomaly subgraph-based root cause locating includes node embedding processing, probability determining processing, and node sorting processing. The node embedding processing is used for embedding an attribute of a node in the anomaly subgraph as a vector. The probability determining processing is used for determining a random walk probability of each node by using a root cause prediction model. The node sorting processing is used for sorting random walk probabilities of nodes in descending order, to determine top X nodes, where X is a positive integer; and determining the X nodes as the root cause of the initial faulty node.

In a microservice scenario, the foregoing different processing requires different data. Refer to Table 1. When a root cause prediction model is a supervised model, a historical fault is used to train the root cause prediction model. When the root cause prediction model is an unsupervised model, the topology structure and the call chain are used to obtain the root cause.

Table 1

| Processing | Required data |
|---|---|
| Graph modeling processing | Topology structure and call chain |
| Anomaly detection processing | Performance indicator and/or log |
| Subgraph generation processing | Topology structure and call chain |
| Entry node refresh processing | Call chain |
| Subgraph reconstruction processing | Topology structure and call chain |
| Node embedding processing | Performance indicator or alarm |
| Root cause prediction model (supervised) in probability determining processing | Historical fault |
| Root cause prediction model (unsupervised) in probability determining processing | Topology structure and call chain |

The following describes the procedure of the root cause locating method with reference to FIG. 6. Refer to step 601 to step 605 in FIG. 6. The method procedure may be executed by the computing device 400 described in FIG. 4. In FIG. 6, a root cause locating method in a cloud platform scenario is used as an example for description.

Step 601: Obtain a temporal heterogeneous graph, where the temporal heterogeneous graph includes a node, an edge, and an attribute of the node.

In this embodiment, during root cause locating, a database stores the temporal heterogeneous graph, and the computing device obtains the temporal heterogeneous graph from the database. For example, when a scale of a platform does not change, and root cause locating is not performed for the first time, the database stores a temporal heterogeneous graph corresponding to the platform.

Alternatively, currently, there is no constructed temporal heterogeneous graph. The computing device obtains a topology structure and a call chain between nodes. The topology structure includes the nodes and a connection relationship between the nodes, and the call chain between the nodes is a call relationship between the nodes. The computing device determines a node from the topology structure, and determines a directional relationship of an edge between the nodes based on the call chain between the nodes. For example, a node A calls a node B, and an edge between the node A and the node B is from the node A to the node B.

The temporal heterogeneous graph obtained by the computing device includes an initial faulty node. The initial faulty node is an input faulty node that has a fault, and an objective of root cause locating is to determine a root cause of the initial faulty node.

The computing device obtains a monitoring indicator. The monitoring indicator includes one or more of an alarm, a performance indicator, or a log. For example, in the cloud platform scenario, the performance indicator includes CPU usage, memory usage, a number of failed calls, and the like. The alarm includes one or more of the number of failed calls exceeding a threshold, a CPU exceeding a threshold, the memory usage exceeding a threshold, or the like. Each type of alarm has a plurality of levels, including critical, major, warning, and normal. Degrees of urgency of different levels are different. To facilitate root cause locating in the following, anomalies determined based on the performance indicator and/or the log are unified as alarms. In this way, after an anomaly is determined, the anomaly is used as an alarm to be associated with a corresponding node or edge. The attribute of the node is an alarm existing for the node, and an attribute of the edge is an alarm existing for the edge.

There are a plurality of types of anomalies. The following provides four possible anomalies: (1) peak increase, where the peak increase refers to a sudden increase in an indicator; (2) peak decrease, where the peak decrease refers to a sudden decrease in an indicator; (3) horizontal increase, where the horizontal increase refers to a significant increase in an indicator in a period of time, for example, an increment exceeds a first threshold; and (4) horizontal decrease, where the horizontal decrease refers to a significant decrease in an indicator in a period of time, for example, a decrement exceeds a second threshold. Considering a large amount of data on a cloud platform, a probe may not be capable of detecting all types of anomalies. To detect all types of anomalies in the performance indicator, the computing device may use an anomaly detection model to perform anomaly detection. The anomaly detection model integrates unsupervised detection models with low time complexity, such as prophet (Prophet), robust seasonal-trend decomposition (robust seasonal-trend decomposition, Robust STL), and $3\sigma$. If any type of detection model in the anomaly detection model detects an anomaly, it is considered that there is an anomaly.

When the monitoring indicator includes the log, the computing device parses the log and extracts a log event from the log, for example, the computing device may use a log parsing model, that is, a drain (drain), to parse the log in a streaming manner. Then, the computing device embeds the log event to obtain an embedding vector of the log event. For example, the computing device embeds the log event into a vector, in other words, the computing device uses pre-trained global vectors (global vectors, Glove) to perform term embedding, and uses a term frequency-inverse document frequency (Term Frequency-Inverse Document Frequency, TF-IDF) to perform sentence embedding. Then, the computing device inputs the embedding vector of the log event into a prediction model, to obtain an anomaly score for the log event, and determines, as an anomaly, a log event whose anomaly score exceeds a threshold. For example, the prediction model may be a multilayer perceptron-based deep support vector data description (support vector data description, SVDD) model.

Step 602: Obtain, in the temporal heterogeneous graph through breadth-first search traversal, a node and an edge on which the initial faulty node depends within a fault time window, and update the temporal heterogeneous graph based on the obtained node and edge.

In this embodiment, to reduce a scale of the temporal heterogeneous graph, filtering may be performed on the temporal heterogeneous graph based on the fault time window. The fault time window is a period of time in which the initial faulty node may be faulty. An event that occurs within a non-fault time window cannot become a root cause of the initial faulty node. The temporal heterogeneous graph further includes an attribute of the edge. The attribute includes time information. For example, the node is a microservice, and the time information in the attribute of the edge is a time period for calling the microservice. The attribute of the node also includes time information. The computing device deletes, in the temporal heterogeneous graph, a node and an edge that are not within the fault time window. Then, in a temporal heterogeneous graph obtained through the deletion, the computing device performs breadth-first search traversal from the initial faulty node, to obtain the node and the edge on which the initial faulty node depends. The computing device retains, in the temporal heterogeneous graph, the node and the edge on which the initial faulty node depends, and deletes, from the temporal heterogeneous graph, a node and an edge on which the initial faulty node does not depend. In this way, filtering can be performed on the temporal heterogeneous graph, to reduce an amount of computation for root cause locating.

It should be noted that, the temporal heterogeneous graph is a directed graph. Therefore, when breadth-first search traversal is performed from the initial faulty node, some nodes are not traversed, and therefore are not nodes on which the initial faulty node depends.

It should be further noted that, in this embodiment of this application, breadth-first search is used as an example for description, and another search manner, for example, width-first search, may alternatively be used for traversal.

Step 603: Select a new faulty node from a neighboring node of the initial faulty node, obtain, in the temporal heterogeneous graph through breadth-first search traversal, a node and an edge on which the new faulty node depends, and update the temporal heterogeneous graph based on the obtained node and edge.

In this embodiment, the computing device determines, as the neighboring node in the temporal heterogeneous graph, a node directly connected to the initial faulty node, and determines the neighboring node as an abnormal node when an alarm in an attribute of the neighboring node is not normal. When an abnormal node exists in the neighboring node, a node with a largest number of alarms being not normal is selected from the neighboring node and determined as the new faulty node. For example, in a microservice scenario, a neighboring node with a largest number of failed calls is determined as the new faulty node. Then, in the temporal heterogeneous graph, breadth-first search traversal is performed to obtain the node and the edge on which the new faulty node depends. The node and the edge on which the new faulty node depends are retained in the temporal heterogeneous graph, and another node and edge are deleted from the temporal heterogeneous graph, to update the temporal heterogeneous graph. In this way, the temporal heterogeneous graph is updated based on the new faulty node, so that the scale of the temporal heterogeneous graph is small, and processing resources for root cause locating are reduced.

It should be noted that, when an alarm of the initial faulty node is not normal, the initial faulty node is an abnormal node, and step 603 may be performed, or step 603 may not be performed. Performing step 603 can make the scale of the temporal heterogeneous graph small.

When the alarm of the initial faulty node is normal and there is an abnormal node in the neighboring node of the initial faulty node, the initial faulty node is not an abnormal node, and step 603 may be performed, and the new faulty node determined in step 603 is updated to a current faulty node. In this way, during subsequent root cause locating, an alarm in a vector of the current faulty node is not a zero vector, so that a determined root cause can be more accurate.

It should be further noted that step 602 and step 603 are optional steps. In other words, step 602 and step 603 may alternatively be not performed.

Step 604: Delete, based on the attribute of the node, a normal node and an edge connected to the normal node that are in the temporal heterogeneous graph, and reconstruct a temporal heterogeneous graph obtained through the deletion, to obtain an anomaly subgraph, where a reachable edge exists between the current faulty node and another node in the anomaly subgraph.

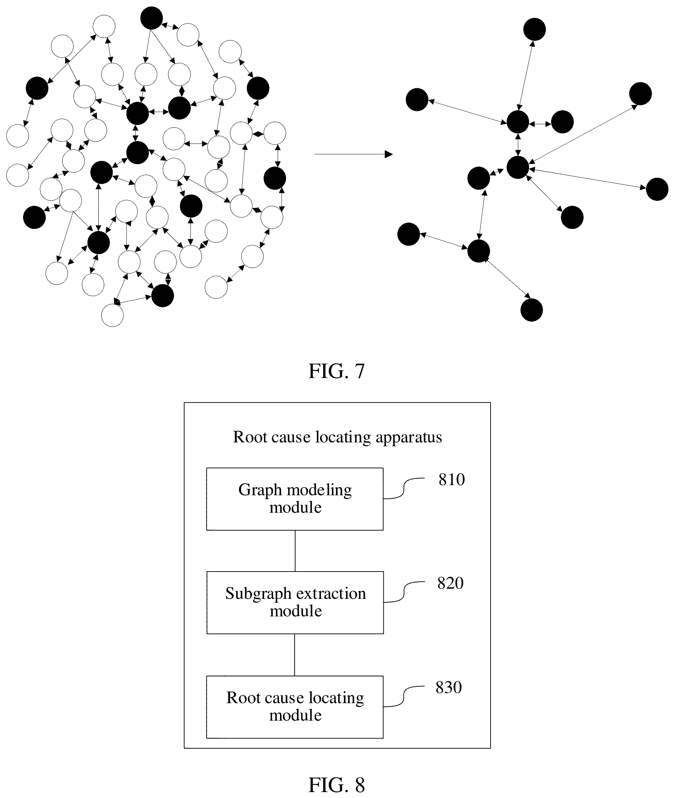

In this embodiment, after obtaining the temporal heterogeneous graph, the computing device determines, as the normal node, a node with an alarm being normal, then determines the edge connected to the normal node, and deletes, from the temporal heterogeneous graph, the normal node and the edge connected to the normal node, to obtain the temporal heterogeneous graph obtained through the deletion. A node that is not connected to an edge exists in the temporal heterogeneous graph obtained through the deletion. The computing device adds, according to a specific rule, an edge for the node that is not connected to an edge, so that the current faulty node has a reachable edge to any other node, to obtain the anomaly subgraph. For example, in FIG. 7, a left side shows a temporal heterogeneous graph, a node in white is a normal node, a node in black is an abnormal node, and a right side shows an anomaly subgraph, including only abnormal nodes. In this way, in the anomaly subgraph, reachability between the current faulty node and the abnormal node is retained, and the scale of the temporal heterogeneous graph and noise caused by the normal node are reduced because no normal node exists. Herein, a reachable edge exists between the current faulty node and any other node, and the edge may be an edge that is directly connected to, or may be an edge connected via an intermediate abnormal node. In other words, the current faulty node can reach any other node.

In step 604, when the initial faulty node is an abnormal node, the current faulty node is the initial faulty node; or when the initial faulty node is not an abnormal node, the current faulty node is a neighboring node of the initial faulty node.

In an example, in step 604, the anomaly subgraph may be obtained through reconstruction by using a class minimum spanning tree algorithm. Processing is as follows:

A shortest path between nodes in the temporal heterogeneous graph obtained through the deletion is determined, and an edge is added, based on the shortest path, for an unconnected node in the temporal heterogeneous graph obtained through the deletion, to obtain the anomaly subgraph.

In this embodiment, the computing device computes a plurality of paths between any two nodes in the temporal heterogeneous graph obtained through the deletion, adds paths between every two nodes to obtain sums of a plurality of paths between abnormal nodes in the temporal heterogeneous graph, and sorts the sums of the plurality of paths in ascending or descending order to determine the shortest path. Then, the computing device adds, based on the shortest path, the edge for the unconnected node in the temporal heterogeneous graph, so that the current faulty node has a reachable edge to any other node, to obtain the anomaly subgraph.

In this embodiment of this application, in a microservice calling scenario, algorithm pseudocode of pseudocode for obtaining the anomaly subgraph based on the temporal heterogeneous graph is further provided:

```
Input: graph G, source node u (Input: graph G, source node u)
```

```
        Output: new graph G, new source node u (Output: new graph G, new source node
u)
        Initialize (Initialize) G = G, u=u
        While true do (while true do)
        Map (map) Sabnormal=
        For all v belonging to тu do (for all v  тu do), where тu represents a
neighboring node of u.
        If v is an abnormal node then (if v is abnormal then)
        Sabnormal[ v ]=number of failed calls (number of failed calls)
        End if (end if)
        End for (end for)
        m=maximum number v of failed calls in Sabnormal (max v in Sabnormal)
        If u is an abnormal node and there is only one element in an Sabnormal set then (if u
is
 abnormal and length Sabnormal==1 then)
        u=m
        If u is a normal node and a number of elements in an Sabnormal set is greater than 0
then (else if u is abnormal and length Sabnormal>0 then)
        u=m
        Else break (else break)
        End if (end if)
        End while (end while)
         u=u
         G=BFS(u), where G=BFS(u) represents that breadth-first search traversal is
performed on u to obtain G
        Return (G, u) (return (G , u)).
```

The graph G is the temporal heterogeneous graph, the source node is the initial faulty node, and the new source node is the new faulty node.

Step 605: Determine the root cause of the initial faulty node in the anomaly subgraph.

In this embodiment, after obtaining the anomaly subgraph, to support a subsequent root cause prediction model, the computing device embeds a node in the anomaly subgraph into a vector, which may also be understood as encoding a node as a vector. For example, a node type and an attribute of a node are embedded through one-hot (one-hot) encoding, and during embedding, vectors of nodes have a same dimension. For example, the attribute of the node is an alarm existing for the node. If the anomaly subgraph includes six types of nodes, each node has 20 types of alarms, and each type of alarm has a plurality of levels (for example, four levels: critical, major, warning, and normal), a length of a vector of each node is $6+20*4=86$. When the current faulty node is the initial faulty node, the computing device computes, based on the initial faulty node and a random walk algorithm, probabilities of all nodes in the anomaly subgraph being the root cause of the initial faulty node, and determines top X nodes with highest probabilities as the root cause of the initial faulty node. When the current faulty node is not the initial faulty node, the computing device computes, based on the current faulty node and a random walk algorithm, probabilities of all nodes in the anomaly subgraph being the root cause of the current faulty node, determines top X nodes with highest probabilities as the root cause of the current faulty node, and determines the root cause of the current faulty node as the root cause of the initial faulty node. The random walk algorithm may be a supervised random walk algorithm.

In an example, in step 605, when a random walk probability is determined, a probability of anomaly propagation between nodes is learned by using a multilayer neural network, and a random walk is simulated with support of an energy vector and a probability transfer matrix, to determine a probability of each node being the root cause. An example process is as follows:

A probability transfer matrix of a node fault in the anomaly subgraph is determined based on a topology structure of the anomaly subgraph and an attribute of the node in the anomaly subgraph, a random walk probability from the current faulty node to another node in the anomaly subgraph is determined based on the probability transfer matrix, and top X nodes in the anomaly subgraph that are sorted in descending order of random walk probabilities are determined as the root cause of the current faulty node, where X is a positive integer.

In this embodiment, for a node i and a node j in the anomaly subgraph, where both i and j are less than or equal to a number of nodes in the anomaly subgraph, the computing device determines, based on the topology structure of the anomaly subgraph and the attribute of the node in the anomaly subgraph, a probability of a fault of the node i being caused by the node j, and obtains a value of an element in an $i^{th}$ row and a $j^{th}$ column in the probability transfer matrix. In this manner, the computing device determines the probability transfer matrix of the node fault in the anomaly subgraph, and performs normalization processing on the probability transfer matrix. The computing device initializes an energy vector of the current faulty node, where the energy vector of the current faulty node may be set to 1; and initializes an energy vector of another node, where the energy vector of the another node may be set to 0. The computing device determines the random walk probability from the current faulty node to another node based on a random walk with a length of k from the current faulty node. The random walk probability is equal to a product of the energy vector of the current faulty node and p to the power of k. The random walk probability is used to simulate the random walk with the length of k, k may be set based on an actual requirement, for example, a value of k is 10, and p is an element in the probability transfer matrix. The computing device sorts the random walk probabilities in the anomaly subgraph in descending order, and determines the top X nodes as the root cause of the current faulty node. X may be set based on an empirical value, for example, a value of X is 1.

In addition, to make the root cause of the current faulty node more accurate, a node that is in the X nodes and whose random walk probability is greater than a specific threshold is determined as the root cause of the current faulty node.

It should be noted that the current faulty node herein is the initial faulty node or the new faulty node mentioned above.

In an example, the computing device may determine the probability transfer matrix based on an adjacent matrix of the anomaly subgraph, construct the adjacent matrix of the anomaly subgraph based on the topology structure of the anomaly subgraph, determine a feature of an edge in the anomaly subgraph based on the attribute of the node in the anomaly subgraph, and learn the feature based on the adjacent matrix by using a deep neural network algorithm, to obtain the probability transfer matrix of the node fault in the anomaly subgraph.

In this embodiment, the adjacent matrix of the anomaly subgraph is represented as A. It is assumed that the anomaly subgraph includes N nodes, where N is greater than or equal to 2, and A is an N*N matrix. Assuming that there is no edge between an $i^{th}$ node and a $j^{th}$ node, a value of an element $A_{i,j}$ in an $i^{th}$ row and a $j^{th}$ column is 0. Assuming that there is an edge from the $i^{th}$ node to the $j^{th}$ node that is between the $i^{th}$ node and the $j^{th}$ node, a value of an element in an $i^{th}$ row and a $j^{th}$ column is 1. Assuming that there is no edge from the $i^{th}$ node to the $j^{th}$ node that is between the $i^{th}$ node and the $j^{th}$ node, but there is an edge from the $j^{th}$ node to the $i^{th}$ node, a value of an element in an $i^{th}$ row and a $j^{th}$ column is 0. The computing device constructs the adjacent matrix of the anomaly subgraph in this manner.

Then, the computing device inputs the attribute of the node into a graph convolutional network (graph convolutional network, GCN) to obtain a feature of the node, and concatenates features of nodes on two endpoints of each edge to obtain a feature of each edge. For example, a feature of the $i^{th}$ node is represented as G(i), a feature of the $j^{th}$ node is represented as G(j), and a feature of the edge between the $i^{th}$ node and the $j^{th}$ node is represented as a matrix [G(i),G(j)]. For example, it is assumed that the feature of the $i^{th}$ node is an a*b matrix, the feature of the $j^{th}$ node is an a*b matrix, and the feature of the $i^{th}$ node and the feature of the $j^{th}$ node are concatenated to obtain an a*2b matrix. The computing device multiplies the feature of each edge by the adjacent matrix, to obtain a product matrix, and inputs the product matrix into the deep neural network algorithm. An obtained output is the probability transfer matrix of the node fault in the anomaly subgraph.

In addition, in this embodiment of this application, a process of training the deep neural network algorithm is further provided. The anomaly subgraph is given, and a faulty node in the anomaly subgraph and a root cause of the faulty node are specified. In addition, an initial GCN and an initial deep neural network algorithm are also given, and energy vectors $\delta$ and $\tilde{\delta}$ are initialized. $\delta$ of the faulty node is 1, $\delta$ of another node is 0, $\tilde{\delta}$ of each root cause is 1/RC, and RC represents a number of root causes. For the faulty node, there may be a plurality of root causes, and $\tilde{\delta}$ of the another node is 0. The computing device extracts a feature of each node by using the initial GCN, and concatenates features of nodes to obtain a feature of an edge between the nodes. The computing device learns the feature of each edge by using the initial deep neural network algorithm, and then simulates the random walk with the length of k by multiplying $\delta$ by p to the power of k, to obtain a prediction result, that is, a predicted random walk probability. The computing device computes a difference between the prediction result and an actual result $\tilde{\delta}$ by using a cosine function, updates the initial GCN and the initial deep neural network algorithm based on the difference, and when the difference between the prediction result and the actual result $\tilde{\delta}$ is less than a specific value, or a number of updates reaches a specific threshold, determines that training of the CGN and the deep neural network algorithm is completed. The GCN and the deep neural network algorithm form the root cause prediction model.

Alternatively, the GCN and the deep neural network algorithm may be separately trained.

In an example, because a root cause of a node may be the node, before the probability transfer matrix of the node fault is determined, a self-loop edge is added for each node in the anomaly subgraph, so that the node returns to the node itself from the node.

In addition, to allow energy to flow back during a random walk, a reverse edge between nodes is added between the nodes, so that energy between the nodes can flow back.

In an example, after the root cause of the initial faulty node is determined, the root cause prediction model may be iteratively updated based on the root cause of the initial faulty node.

In this embodiment of this application, algorithm pseudocode for determining the root cause of the faulty node based on the anomaly subgraph is further provided:

Input: graph G1 including N nodes, source node u, root cause set (root cause, RC) of a node u (only training), length k of a random walk (Input: graph G1 with N nodes, source node u, root causes set RC corresponding to node u (only training), random walk length k)

Output: score for each node (that is, random walk probability of each node) (Output: score for each node)

Perform first-order GCN convolution on G1, where G[u] represents an embedded feature of the node u (Perform first-order GCN convolution on G1, G[u] represents the embedded feature of node u)
Add a self-loop edge and a reverse edge (Adding self-loops and reverse edges to G1)
Initialize energy vectors $\delta$ and $\tilde{\delta}$ and an adjacent matrix A (Initialize energy vector $\delta$, $\tilde{\delta}$, adjacent matrix A)

$$\delta[\text{u}] = 1$$

For all $i \in RC$ do (For all $i \in RC$ do)

$$\tilde{\delta} = \frac{1}{\text{size}(RC)}$$

End for loop (end for)
Probability transfer matrix (transfer matrix) $P_{ij} = DNN([G(i), G(j)]^* A_{ij})$

$$P_{ij} = soft\max\left(sigmoid\left(P_{ij}\right)\right) \quad ,$$

where $P_{ij} = soft\max(sigmoid(P_{ij}))$ represents performing normalization processing on the probability transfer matrix.

$$\delta = \delta \square p^k$$

If training then (if training then)

$$\text{loss}\ (\delta,\ \tilde{\delta}) = 1 - \cos\ (\delta,\ \tilde{\delta}),$$

representing that a loss of $\delta$ and $\tilde{\delta}$ is equal to 1 minus a cosine distance of $\delta$ and $\tilde{\delta}$.
End if loop (end if)
Return (return) $\delta$

The graph G1 is the anomaly subgraph, and the source node is the current faulty node.

In this embodiment of this application, reachability between a faulty node and an abnormal node is retained during anomaly subgraph extraction, and the scale of the temporal heterogeneous graph and noise caused by a normal node are greatly reduced when a root cause locating algorithm is executed. In addition, a supervised random walk algorithm combined with a graph neural network is set. A probability of anomaly propagation between nodes can be learned by training only a small amount of data including a faulty node and a root cause, and a random walk probability of each node being a root cause is determined based on a random walk.

In addition, because modeling may be performed based on a temporal heterogeneous graph in most operation and maintenance scenarios, embodiments of this application may be applied to a plurality of operation and maintenance scenarios, and have specific universality and strong generalization. For example, embodiments of this application may be applied to an operation and maintenance platform such as storage, cloud, and wireless network.

In embodiments of this application, to better reflect advantages of embodiments of this application, experiments are performed on a cloud platform and an artificial intelligence for operations 2000 (artificial intelligence for operations 2000, AIOps2020) dataset to verify beneficial effects corresponding to this application. Details are described from the following aspects:

1. Baseline model: In an automatic map (AutoMap), a plurality of types of time series metrics are used to dynamically generate fault correlations, forward, self-directed, and reverse random walk algorithms are used to design a heuristic model to diagnose a root cause, and introducing a historical fault to compute a global weight of an indicator is also supported. In Groot, a temporal causal graph is constructed based on a dependency graph by events, various types of indicators, logs, and expertise of site reliability engineers (site reliability engineer, SRE) are summarized, and a root cause of a fault is located based on a personalized page rank (PageRank).
2. Dataset: A manual anomalous event is created. The manual anomalous event is generated as follows: For each event, c entities (c=1, 2, or 3 are considered in the following experiment) in the event are selected. For each target entity, other s entities are selected, where s is a positive integer. Euclidean distances between attribute vectors $x\_i$ of the s entities and a target attribute vector x of the target entity are computed. Then, a node with a largest Euclidean distance is selected to replace the target entity.

Effect description: On most cloud platforms, some faults may correspond to a plurality of root causes. When there are a plurality of root causes, prediction precision cannot be accurately measured based on conventional precision, a conventional recall rate, and a conventional F1 score. In this application, root cause precision S is used to evaluate precision of all models. $s = avg \sum_{i \in I} \frac{|P_i \cap R_i|}{R_i}$, where $I$ is a set of all abnormal events, $R_i$ is a set of true root causes, and $P_i$ is a set of predicted root causes (where a length is equal to $R_i$). Overall performance of embodiments of this application and the baseline model on a hybrid cloud platform is shown in Table 2 and Table 3, and overall performance on the AIOps2020 dataset is shown in Table 4. In Table 2, the complete procedure shown in FIG. 6 is performed in embodiments of this application, and step 604 is also performed by the baseline model. In Table 3, step 604 in FIG. 6 is not performed in embodiments of this application. In Table 4, step 604 in FIG. 6 is not performed in embodiments of this application.

Table 2

|  | Root cause prediction precision | | | | | |
|  | Application fault | Network fault | Virtual machine fault | Middleware fault | Host fault | Sum |
|---|---|---|---|---|---|---|
| Solution in embodiments of this application | 0.897 | 0.965 | 0.932 | 1 | 0.924 | 0.919 |
| AutoMap+step 604 | 0.778 | 0.965 | 0.328 | 1 | 0.224 | 0.634 |
| Groot+step 604 | 0.897 | 0.965 | 0.387 | 1 | 0.364 | 0.731 |

Table 3

|  | Root cause prediction precision | | | | | |
|  | Application fault | Network fault | Virtual machine fault | Middleware fault | Host fault | Sum |
|---|---|---|---|---|---|---|
| Solution in embodiments of this application-step 604 | 0.851 | 0.139 | 0.503 | 1 | 0.734 | 0.697 |
| AutoMap | 0.341 | 0 | 0 | 1 | 0.111 | 0.232 |
| Groot | 0.613 | 1 | 1 | 0.938 | 0.181 | 0.367 |

Table 4

|  | Root cause prediction precision | | | |
|  | Host fault | Database fault | Network fault | Sum |
|---|---|---|---|---|
| Solution in embodiments of this application-step 604 | 0.894 | 1 | 0.931 | 0.938 |
| AutoMap | 0 | 0.657 | 0.033 | 0.123 |
| Groot | 0.052 | 0.829 | 0.043 | 0.367 |

It can be learned from Table 2 to Table 4 that performance of the root cause precision S is greatly better than that of all baseline models. This proves effectiveness of the solution in embodiments of this application. For all methods, it is assumed that a length of a random walk (a number of PageRank iterations) is set to 10, and 10 samples are randomly selected for each fault type as historical faults (less than 2% of a total sample number). Table 2 summarizes experimental results on a hybrid cloud dataset. It can be learned that the solution in embodiments of this application achieves a best result in all types of faults.

It can also be learned, by comparing Table 2 with Table 3, that deleting a normal node and an edge connected to the normal node and reconstructing a subgraph can significantly improve precision of root cause locating.

It can also be learned from Table 4 that root cause precision of the solution in embodiments of this application is far higher than that of the AutoMap and the Groot. This also indicates that the solution in embodiments of this application can adapt to different operation and maintenance scenarios, and accurately diagnose a root cause of a fault.

The following describes a root cause locating apparatus provided in embodiments of this application.

FIG. 8 is a diagram of a structure of a root cause locating apparatus according to an embodiment of this application. The apparatus may be implemented as a part of the apparatus or an entire apparatus by using software, hardware, or a combination thereof. The apparatus provided in this embodiment of this application may implement the procedures shown in FIG. 5 and FIG. 6 in embodiments of this application. The apparatus includes a graph modeling module 810, a subgraph extraction module 820, and a root cause locating module 830.

The graph modeling module 810 is configured to obtain a temporal heterogeneous graph, where the temporal heterogeneous graph includes a node, an edge, and an attribute of the node, and the node includes an initial faulty node. The graph modeling module 810 may be specifically configured to implement a graph modeling function in step 601 and perform an implicit step included in step 601.

The subgraph extraction module 820 is configured to delete, based on an attribute of the node, a normal node and an edge connected to the normal node that are in the temporal heterogeneous graph, and reconstruct a temporal heterogeneous graph obtained through the deletion, to obtain an anomaly subgraph, where a reachable edge exists between a current faulty node and another node in the anomaly subgraph, and the current faulty node is obtained based on the initial faulty node. The subgraph extraction module 820 may be specifically configured to implement subgraph extraction in step 604 and perform an implicit step included in step 604.

The root cause locating module 830 is configured to determine a root cause of the initial faulty node in the anomaly subgraph. The root cause locating module 830 may be specifically configured to implement a root cause locating function in step 605 and perform an implicit step included in step 605.

In an example, the subgraph extraction module 820 is further configured to:

before deleting, based on the attribute of the node, the normal node and the edge connected to the normal node that are in the temporal heterogeneous graph, select a new faulty node from a neighboring node of the initial faulty node, where the new faulty node is an abnormal node;

obtain, in the temporal heterogeneous graph through breadth-first search traversal, a node and an edge on which the new faulty node depends; and

update the temporal heterogeneous graph based on the obtained node and edge.

In an example, the subgraph extraction module 820 is further configured to: before selecting the new faulty node from the neighboring node of the initial faulty node, determine that the initial faulty node is not an abnormal node.

The root cause locating module 830 is configured to:

determine a root cause of the current faulty node in the anomaly subgraph based on the current faulty node, where the current faulty node is the new faulty node; and

determine the root cause of the current faulty node as the root cause of the initial faulty node.

In an example, the root cause locating module 830 is configured to:

determine a probability transfer matrix of a node fault in the anomaly subgraph based on a topology structure of the anomaly subgraph and an attribute of a node in the anomaly subgraph;

determine a random walk probability from the current faulty node to another node in the anomaly subgraph based on the probability transfer matrix; and

determining, as the root cause of the current faulty node, top X nodes in the anomaly subgraph that are sorted in descending order of random walk probabilities, where X is a positive integer.

In an example, the root cause locating module 830 is configured to:

construct an adjacent matrix of the anomaly subgraph based on the topology structure of the anomaly subgraph;

determine a feature of an edge in the anomaly subgraph based on the attribute of the node in the anomaly subgraph; and

learn the feature based on the adjacent matrix by using a deep neural network algorithm, to obtain the probability transfer matrix of the node fault in the anomaly subgraph.

In an example, the root cause locating module 830 is further configured to:

before determining the probability transfer matrix of the node fault in the anomaly subgraph, add, in the anomaly subgraph, a self-loop edge for each node and a reverse edge between nodes.

In an example, the subgraph extraction module 820 is configured to:

determine a shortest path between nodes in the temporal heterogeneous graph obtained through the deletion; and add, based on the shortest path, an edge for an unconnected node in the temporal heterogeneous graph obtained through the deletion, to obtain the anomaly subgraph.

In an example, the temporal heterogeneous graph further includes an attribute of the edge, and the subgraph extraction module 820 is further configured to:

before deleting, based on the attribute of the node, the normal node and the edge connected to the normal node that are in the temporal heterogeneous graph, obtain, in the temporal heterogeneous graph through breadth-first search traversal, a node and an edge on which the faulty node depends within a fault time window; and update the temporal heterogeneous graph based on the obtained node and edge.

In an example, the graph modeling module 810 is configured to:

generate the node and the edge in the temporal heterogeneous graph based on a topology structure and a call chain between nodes; and generate the attribute of the node based on a monitoring indicator, where the monitoring indicator includes one or more of an alarm, a performance indicator, or a log.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the root cause locating method.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a digital multi-functional disc (digital video disc, DVD)), a semiconductor medium (for example, a solid-state drive), or the like. The computer-readable storage medium includes instructions. The instructions instruct a computing device to perform the root cause locating method.

A person of ordinary skill in the art may be aware that, in combination with the examples described in embodiments disclosed in this application, method steps and units may be implemented by using electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes outside the scope of this application.

In several embodiments provided in this application, it should be understood that the disclosed system architectures, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions in embodiments of this application.

In addition, modules in embodiments of this application may be integrated into one processing module, or each of the modules may exist alone physically, or two or more modules may be integrated into one module. The integrated module may be implemented in a form of hardware, or may be implemented in a form of a software module.

If the integrated module is implemented in the form of the software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions in embodiments of this application.

**Claims**

1. A root cause locating method, wherein the method comprises:

   obtaining a temporal heterogeneous graph, wherein the temporal heterogeneous graph comprises a node, an edge, and an attribute of the node, and the node comprises an initial faulty node;
   deleting, based on the attribute of the node, a normal node and an edge connected to the normal node that are in the temporal heterogeneous graph, and reconstructing a temporal heterogeneous graph obtained through the deletion, to obtain an anomaly subgraph, wherein a reachable edge exists between a current faulty node and another node in the anomaly subgraph, and the current faulty node is obtained based on the initial faulty node; and
   determining a root cause of the initial faulty node in the anomaly subgraph.

2. The method according to claim 1, wherein before the deleting, based on the attribute of the node, the normal node and the edge connected to the normal node that are in the temporal heterogeneous graph, the method further comprises:

   selecting a new faulty node from a neighboring node of the initial faulty node, wherein the new faulty node is an abnormal node;
   obtaining, in the temporal heterogeneous graph through breadth-first search traversal, a node and an edge on which the new faulty node depends; and
   updating the temporal heterogeneous graph based on the obtained node and edge.

3. The method according to claim 2, wherein before the selecting the new faulty node from the neighboring node of the initial faulty node, the method further comprises:

   determining that the initial faulty node is not an abnormal node; and
   the determining the root cause of the initial faulty node in the anomaly subgraph comprises:

      determining a root cause of the current faulty node in the anomaly subgraph based on the current faulty node, wherein the current faulty node is the new faulty node; and
      determining the root cause of the current faulty node as the root cause of the initial faulty node.

4. The method according to claim 3, wherein the determining the root cause of the current faulty node in the anomaly subgraph based on the current faulty node comprises:

   determining a probability transfer matrix of a node fault in the anomaly subgraph based on a topology structure of the anomaly subgraph and an attribute of a node in the anomaly subgraph;
   determining a random walk probability from the current faulty node to another node in the anomaly subgraph based on the probability transfer matrix; and
   determining, as the root cause of the current faulty node, top X nodes in the anomaly subgraph that are sorted in descending order of random walk probabilities, wherein X is a positive integer.

5. The method according to claim 4, wherein the determining the probability transfer matrix of the node fault in the anomaly subgraph based on the topology structure of the anomaly subgraph and the attribute of the node in the anomaly subgraph comprises:

   constructing an adjacent matrix of the anomaly subgraph based on the topology structure of the anomaly subgraph;

determining a feature of an edge in the anomaly subgraph based on the attribute of the node in the anomaly subgraph; and

learning the feature based on the adjacent matrix by using a deep neural network algorithm, to obtain the probability transfer matrix of the node fault in the anomaly subgraph.

6. The method according to claim 4 or 5, wherein before the determining the probability transfer matrix of the node fault in the anomaly subgraph, the method further comprises:

adding, in the anomaly subgraph, a self-loop edge for each node and a reverse edge between nodes.

7. The method according to any one of claims 1 to 6, wherein the reconstructing the temporal heterogeneous graph obtained through the deletion, to obtain the anomaly subgraph comprises:

determining a shortest path between nodes in the temporal heterogeneous graph obtained through the deletion; and

adding, based on the shortest path, an edge for an unconnected node in the temporal heterogeneous graph obtained through the deletion, to obtain the anomaly subgraph.

8. The method according to any one of claims 1 to 7, wherein the temporal heterogeneous graph further comprises an attribute of the edge; and before the deleting, based on the attribute of the node, the normal node and the edge connected to the normal node that are in the temporal heterogeneous graph, the method further comprises:

obtaining, in the temporal heterogeneous graph through breadth-first search traversal, a node and an edge on which the initial faulty node depends within a fault time window; and

updating the temporal heterogeneous graph based on the obtained node and edge.

9. The method according to any one of claims 1 to 8, wherein the obtaining the temporal heterogeneous graph comprises:

generating the node and the edge in the temporal heterogeneous graph based on a topology structure and a call chain between nodes; and

generating the attribute of the node based on a monitoring indicator, wherein the monitoring indicator comprises one or more of an alarm, a performance indicator, or a log.

10. A root cause locating apparatus, wherein the apparatus comprises:

a graph modeling module, configured to obtain a temporal heterogeneous graph, wherein the temporal heterogeneous graph comprises a node, an edge, and an attribute of the node, and the node comprises an initial faulty node;

a subgraph extraction module, configured to delete, based on the attribute of the node, a normal node and an edge connected to the normal node that are in the temporal heterogeneous graph, and reconstruct a temporal heterogeneous graph obtained through the deletion, to obtain an anomaly subgraph, wherein a reachable edge exists between a current faulty node and another node in the anomaly subgraph, and the current faulty node is obtained based on the initial faulty node; and

a root cause locating module, configured to determine a root cause of the initial faulty node in the anomaly subgraph.

11. The apparatus according to claim 10, wherein the subgraph extraction module is further configured to:

before deleting, based on the attribute of the node, the normal node and the edge connected to the normal node that are in the temporal heterogeneous graph, select a new faulty node from a neighboring node of the initial faulty node, wherein the new faulty node is an abnormal node;

obtain, in the temporal heterogeneous graph through breadth-first search traversal, a node and an edge on which the new faulty node depends; and

update the temporal heterogeneous graph based on the obtained node and edge.

12. The apparatus according to claim 11, wherein the subgraph extraction module is further configured to: before selecting the new faulty node from the neighboring node of the initial faulty node, determine that the initial faulty node is not an abnormal node; and
the root cause locating module is configured to:

determine a root cause of the current faulty node in the anomaly subgraph based on the current faulty node, wherein the current faulty node is the new faulty node; and
determine the root cause of the current faulty node as the root cause of the initial faulty node.

13. The apparatus according to claim 12, wherein the root cause locating module is configured to:

determine a probability transfer matrix of a node fault in the anomaly subgraph based on a topology structure of the anomaly subgraph and an attribute of a node in the anomaly subgraph;
determine a random walk probability from the current faulty node to another node in the anomaly subgraph based on the probability transfer matrix; and
determine, as the root cause of the current faulty node, top X nodes in the anomaly subgraph that are sorted in descending order of random walk probabilities, wherein X is a positive integer.

14. The apparatus according to claim 13, wherein the root cause locating module is configured to:

construct an adjacent matrix of the anomaly subgraph based on the topology structure of the anomaly subgraph;
determine a feature of an edge in the anomaly subgraph based on the attribute of the node in the anomaly subgraph; and
learn the feature based on the adjacent matrix by using a deep neural network algorithm, to obtain the probability transfer matrix of the node fault in the anomaly subgraph.

15. The apparatus according to claim 13 or 14, wherein the root cause locating module is further configured to:
before determining the probability transfer matrix of the node fault in the anomaly subgraph, add, in the anomaly subgraph, a self-loop edge for each node and a reverse edge between nodes.

16. The apparatus according to any one of claims 10 to 15, wherein the subgraph extraction module is configured to:

determine a shortest path between nodes in the temporal heterogeneous graph obtained through the deletion; and
add, based on the shortest path, an edge for an unconnected node in the temporal heterogeneous graph obtained through the deletion, to obtain the anomaly subgraph.

17. The apparatus according to any one of claims 10 to 16, wherein the temporal heterogeneous graph further comprises an attribute of the edge, and the subgraph extraction module is further configured to:

before deleting, based on the attribute of the node, the normal node and the edge connected to the normal node that are in the temporal heterogeneous graph, obtain, in the temporal heterogeneous graph through breadth-first search traversal, a node and an edge on which the initial faulty node depends within a fault time window; and
update the temporal heterogeneous graph based on the obtained node and edge.

18. The apparatus according to any one of claims 10 to 17, wherein the graph modeling module is configured to:

generate the node and the edge in the temporal heterogeneous graph based on a topology structure and a call chain between nodes; and
generate the attribute of the node based on a monitoring indicator, wherein the monitoring indicator comprises one or more of an alarm, a performance indicator, or a log.

19. A computing device, wherein the computing device comprises a processor and a memory; and
the processor is configured to execute instructions stored in the memory, to enable the computing device to perform the method according to any one of claims 1 to 9.

20. A computer-readable storage medium, wherein the storage medium comprises computer program instructions, wherein when the computer program instructions are executed by a computing device, the computing device performs the method according to any one of claims 1 to 9.

Application

Process

Database

Virtual
machine

Cloud disk

Physical
machine

Switch

FIG. 1

Application

Process

Database

Virtual
machine

Cloud disk

Physical
machine

Switch

Subgraph

FIG. 2

Graph database

Call chain

Alarm

Topology
structure

Performance
indicator

Log

Time series
database

Root cause locating
apparatus

Monitoring
module

Training
apparatus

Re-train

FIG. 3

400

403

Memory

Program code
4031

Operating
system

401

Processor

Communication
bus        402

404

Network interface

FIG. 4

| Data processing to obtain a temporal heterogeneous graph | Subgraph extraction to obtain an anomaly subgraph | Anomaly subgraph–based root cause locating |
|---|---|---|
| Module selection processing | Subgraph reconstruction processing | Node embedding processing |
| Anomaly detection processing | Entry node refresh processing | Probability determining processing |
| Graph modeling processing | Subgraph generation processing | Node sorting processing |

## FIG. 5

Obtain a temporal heterogeneous graph, where the temporal heterogeneous graph includes a node, an edge, and an attribute of the node — 601

(Optional)

Obtain, in the temporal heterogeneous graph through breadth-first search traversal, a node and an edge on which a faulty node depends within a fault time window, and update the temporal heterogeneous graph based on the obtained node and edge — 602

Select a new faulty node from a neighboring node of an initial faulty node, obtain, in the temporal heterogeneous graph through breadth-first search traversal, a node and an edge on which the new faulty node depends, and update the temporal heterogeneous graph based on the obtained node and edge — 603

Delete, based on the attribute of the node, a normal node and an edge connected to the normal node that are in the temporal heterogeneous graph, and reconstruct a temporal heterogeneous graph obtained through the deletion, to obtain an anomaly subgraph, where a reachable edge exists between a current faulty node and another node in the anomaly subgraph — 604

Determine a root cause of the initial faulty node in the anomaly subgraph — 605

## FIG. 6

FIG. 7

FIG. 8

## INTERNATIONAL SEARCH REPORT

| International application No. |
|---|
| **PCT/CN2024/101444** |

### A. CLASSIFICATION OF SUBJECT MATTER

H04L41/0631(2022.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 定位, 故障, 异常, 根因, 源头, 原因, 时序, 图, 树, 拓扑, 节点, 边, 属性, 性能, 指标, 初始, 原始, 删除, 过滤, 正常, 重构, 到达, 遍历, 搜索, 随机游走, 概率, locate, fault, exceptional, root, source, cause, timing, graph, tree, probability, node, edge, property, performance, indicator, initial, original, delete, filter, normal, reconstruction, arrival, traversal, search, random walk, probability

### C. DOCUMENTS CONSIDERED TO BE RELEVANT

| Category* | Citation of document, with indication, where appropriate, of the relevant passages | Relevant to claim No. |
|---|---|---|
| Y | CN 113900844 A (BEIJING BISHI TECHNOLOGY CO., LTD.) 07 January 2022 (2022-01-07)<br>description, paragraphs [0007]-[0132], and figures 1-6 | 1-20 |
| Y | CN 115460056 A (ZTE CORP.) 09 December 2022 (2022-12-09)<br>description, paragraphs [0004]-[0011] | 1-20 |
| A | CN 114239200 A (ALIBABA CLOUD COMPUTING LTD.) 25 March 2022 (2022-03-25)<br>entire document | 1-20 |
| A | CN 113676484 A (NSFOCUS TECHNOLOGIES GROUP CO., LTD.) 19 November 2021 (2021-11-19)<br>entire document | 1-20 |
| A | US 2023164022 A1 (GOOGLE LLC) 25 May 2023 (2023-05-25)<br>entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 September 2024** | **09 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/101444**

| Patent document cited in search report | | | Publication date (day/month/year) | Patent family member(s) | | | Publication date (day/month/year) |
|---|---|---|---|---|---|---|---|
| CN | 113900844 | A | 07 January 2022 | None | | | |
| CN | 115460056 | A | 09 December 2022 | None | | | |
| CN | 114239200 | A | 25 March 2022 | None | | | |
| CN | 113676484 | A | 19 November 2021 | CN | 113676484 | B | 18 April 2023 |
| US | 2023164022 | A1 | 25 May 2023 | EP | 4184880 | A1 | 24 May 2023 |

Form PCT/ISA/210 (patent family annex) (July 2022)

**EP 4 712 425 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310782549X